(19) Europäisches Patentamt
European Patent Office
Office européen des brevets

(11) **EP 1 195 074 B1**

(12) **EUROPEAN PATENT SPECIFICATION**

(45) Date of publication and mention
of the grant of the patent:
**19.09.2007 Bulletin 2007/38**

(51) Int Cl.:
**H04Q 11/04** (2006.01)

(21) Application number: **00946635.0**

(22) Date of filing: **22.06.2000**

(86) International application number:
**PCT/SE2000/001340**

(87) International publication number:
**WO 2001/001728 (04.01.2001 Gazette 2001/01)**

(54) **IMPROVEMENTS IN, OR RELATING TO, TELECOMMUNICATIONS SYSTEMS**

VERBESSERUNG VON ODER BEZÜGLICH TELEKOMMUNIKATIONSSYSTEMEN

AMELIORATIONS APPORTEES A DES SYSTEMES DE TELECOMMUNICATIONS

(84) Designated Contracting States:
**AT BE CH CY DE DK ES FI FR GB GR IE IT LI LU MC NL PT SE**
Designated Extension States:
**LT LV**

(30) Priority: **24.06.1999 SE 9902419**

(43) Date of publication of application:
**10.04.2002 Bulletin 2002/15**

(73) Proprietor: **TELIA AB**
**123 86 Farsta (SE)**

(72) Inventors:
• **AHLARD, David**
**S-127 37 Skärholmen (SE)**
• **BERGKVIST, Joakim**
**S-170 73 Solna (SE)**
• **CSELENY, István**
**S-136 63 Haninge (SE)**

(74) Representative: **Hopfgarten, Nils et al**
**L.A. Groth & Co. KB**
**P.O. Box 6107**
**102 32 Stockholm (SE)**

(56) References cited:
**EP-A2- 0 774 878**      **WO-A1-99/13624**
**GB-A- 2 319 710**

• **ROBERT SZABO ET AL.: 'Performance evaluation of an intelligent resource allocation scheme for multimedia applications' THE PROCEEDINGS OF THE 1998 SYMPOSIUM ON PERFORMANCE EVALUATION July 1998, (RENO, NV), pages 302 - 306, XP002907371**
• **JEROME TASSEL ET AL.: 'An end to end price-based Qos control component using reflective Java' 4TH COST 237 WORKSHOP December 1997, (LISBON), pages 18 - 32, XP002907372**
• **ERRIN W. FULP ET AL.: 'Paying for Qos: An optimal distributed algorithm for pricing network resources' THE PROCEEDINGS OF THE IWQOS'98 WORKSHOP May 1998, (NAPPA VALLEY, CA), pages 75 - 84, XP010280482**
• **GABRIEL DERMLER ET AL.: 'A negotiation and resource reservation protocol (NRP) for configurable multimedia applications' IEEE PROCEEDINGS OF MULTIMEDIA'96 1996, pages 113 - 115, XP002907359**

**Description**

The present invention relates to a telecommunications system employing a resource reservation protocol, a subscriber terminal adapted for use with the telecommunications system and a method of resource reservation for use in a telecommunications system.

Most currently known resource reservation protocols propagate only one specific resource value, for example, peak transmission rate, per reservation trial, even if there are several, distinct, resource values that can be accepted by a scalable application. If the required resource value cannot be reserved, it is up to the end-user application to downgrade the original resource demand and send a new reservation message. Therefore, multiple reservation trials are needed, since the scalable nature of the application is ignored. Even the exceptions, for example, ABR in ATM, handle only two resource values, i.e. mean and peak cell rates. The ability of users to perceive quality in a more granular manner, i.e. the ability of users to differentiate several steps between the two extremes, is ignored.

EP-A2-0 774 878, upon which the preamble of claims 1, 15 and 24 is based, discloses an electronic bridge resource management system comprising a programmatically implemented processing system having a bridge service that interfaces with a plurality of clients, where said bridge service receives a quality of service (QoS) specification from each of said clients, and a resource manager that receives said QoS specification from said bridge service, distributes at least one QoS constraint associated with said QoS specification across flow processing modules of a channel, determines resource requirements for each of said flow processing modules, and determines whether bridge resources can be allocated to meet said QoS specification. Said clients may alter their QoS specifications and retry if said resource manager denies them admission because of lack of available bridge resources.

JÉRÔME TASSEL ET AL.: "An End to End Price-Based QoS Control Component Using Reflective Java" 4th COST 237 WORKSHOP December 1997, Lisboa, pages 18-32, XP002907372, describes a model allowing easy, flexible addition of quality of service (QoS) control to Java Internet applications. The QoS is expressed in terms of network and host resources, the network QoS being controlled with RSVP. A user budget agent is introduced, which controls the budget of a user according to some rules predefined by the user. The rules include the time constraints on reservation establishment and restrictions on maximum spending per stream and per application. The QoS manager requests a quote for the amount of resources it wants to reserve and sends this quote to the user budget agent which then can authorise or refuse is, according to the user spending rules.

ERRIN W. PULP ET AL.: "Paying for QoS: An Optimal Distributed Algorithm for Pricing Network Resources" THE PROCEEDINGS OF THE IWQoS 98 WORKSHOP May 1998, Nappa Valley, CA, pages 75-84, XP010280482, discloses a distributed microeconomic flow control technique, that models the network as competitive markets. In these markets switches price their link bandwidth based on supply and demand, and users purchase bandwidth so as to maximize their individual quality of service (QoS).

GABRIEL DERMLER ET AL.: "A Negotiation and Resource Reservation Protocol (NRP) for Configurable Multimedia Applications" IEEE PROCEEDINGS OF MULTIMEDIA '96, 1996, pages 113-115, XP002907359 describes an abstract model for describing multimedia applications, and based on this model application level negotiation is positioned inside a QoS architecture distinguishing QoS levels for clients, application and transport system. Further, an NRP protocol and its applicability to applications are disclosed.

WO 99/13624 A1 discloses an approach to provide both bounded-delay and best-effort operation in a packet network node, by means of a packet network, and packet network elements and host elements therein. The bounded-delay mode is capable of providing a firm end-to-end delay bound.

GB-A-2 319 710 describes an invention which relates to computer communications and networking, and in particular the delivery of data such as advertising and electronic published content over electronic networks. More specifically, the delivery of electronic data with a specified quality and the delivery of advertising with specified quality and targeting are disclosed.

Multiple reservations clearly result in inefficient network usage. They create long and variable connection setup times and require the network nodes to handle more signalling messages than are really needed in order to achieve a successful connection setup. A further problem is that multiple reservations lead to blocking caused by over-allocated resources in the network.

A common approach is to have policy servers associate only a simple priority to users and applications, e.g. high, medium, or low, see Dynamic-Access Software, 3COM Technical Papers, 1997, although the QoS policy could reflect the capabilities of the application and the preferences of the user.

Multimedia applications with distinct quality parameters, e.g. video frame rate, picture resolution, or audio sampling rate, have a certain set of possible resource values that they require from the network. The set of these resource values can be expressed in a Resource Vector. Moreover, users have different opinions about the different quality settings and assign different price thresholds to each, resulting in a Price Vector. The information represented by these two vectors can be combined in a Downgrade Vector, which can be carried in the reservation message (e.g. RSVP/RESV or IRMA/RING). This enables routers, or ATM switches, to utilise the downgrade vector for intelligent resource reservation.

The present invention utilises Resource Vectors, Price Vectors and Downgrade Vectors to provide an improved technique for resource reservation.

The definition of Resource Vector, Price Vector and Downgrade Vector for generalised resource types and applications, their calculation and usage for policy based resource reservation, is unique to the present invention. A simpler concept using the downgrade vector has been described for the videophone service with four quality parameters and one resource type, namely bandwidth, see R. Szabó, I. Cselényi, Performance Evaluation of an Intelligent Resource Allocation Scheme for Multimedia Applications, SPECTS'98, Symposium on Performance Evaluation of Computer and Telecommunication Systems, Reno, Nevada, July 19-22, 1998, pp.302-306, XP 002907371.

The main advantages of using the Downgrade Vector approach for resource reservation, as in the present invention, include:

fewer connection setup trials;

dynamic policy handling; and

more useful and informative network policies, i.e. not only high, medium, low priority.

Because the present invention requires fewer setup trials, the connection setup time is reduced and is fixed, there is a reduced demand for temporary allocation of resources which, in turn, reduces the probability of call blocking. In addition, fewer signalling messages per connection setup are required.

According to a first aspect of the present invention, there is provided a telecommunications data transmission system comprising a transmission network having a plurality of nodes, a plurality of access nodes and a plurality of subscriber terminals connected to access nodes, said telecommunications data transmission system being adapted to support provision of multimedia telecommunications services and employing a resource reservation protocol, said resource reservation protocol being adapted to permit users to specify a preference for a multiplicity of levels of QoS and said resource reservation protocol being adapted to reserve a plurality of resource types where the system comprises the features defined in the characterising portion of claim 1.

A user's preference with regard to QoS may be recorded by elements of a Price Vector, each element of which corresponds to a notional "price" that a user is prepared to pay for a given level of said multiplicity of levels of QoS.

Default values for each element of said Price Vector may be determined from user trials.

A set of possible resource values for each resource type may be recorded by the elements of a Resource Vector, each element of which corresponds to an available resource level for a given one of said plurality of resource types.

Means for merging said Price Vector with said Resource Vector to produce a Downgrade Vector specifying resource levels supported by a given application which a user is prepared to accept in a descending order of user preference may be provided.

Said Downgrade Vector may be carried by resource reservation messages propagated between nodes in said transmission network.

Each of said plurality of subscriber terminals may be adapted to calculate a Downgrade Vector for each application running thereon and said subscriber terminal may be adapted to transmit said Downgrade Vectors to the transmission network.

Said Downgrade Vectors may be calculated from Price Vectors and Resource Vectors retrieved from configuration files stored in said subscriber terminals.

Said Downgrade Vectors may be calculated from Price Vectors and Resource Vectors retrieved by said subscriber terminals from a policy server.

Said Downgrade Vectors may be calculated from Price Vectors, derived directly from requests addressed to a user of said subscriber terminal, and Resource Vectors retrieved by said subscriber terminal.

Said access nodes may be adapted to calculate a Downgrade Vector from a Price Vector stored in a user database and a Resource Vector.

Downgrade Vectors for each application and user, or groups thereof, may be pre-calculated and stored in a policy server from where they can be retrieved by a subscriber terminal, or access node.

A Downgrade Vector may be carried in a RSVP/RESV reservation message.

A Downgrade Vector may be carried in an IRMA/RING reservation message.

According to a second aspect of the present invention, there is provided a subscriber terminal, for use with a telecommunications data transmission system as set forth in any preceding paragraph, and adapted to support a resource reservation protocol, said resource reservation protocol being adapted to permit users to specify a preference for a multiplicity of levels of QoS and said resource reservation protocol being adapted to reserve a plurality of resource types, where the terminal comprises the features defined in the characterising portion of claim 15.

A user's preference with regard to QoS may be recorded by elements of a Price Vector, each element of which corresponds to a notional "price" that a user is prepared to pay for a given level of said multiplicity of levels of QoS.

A set of possible resource values for each resource type may be recorded by the elements of a Resource Vector, each element of which corresponds to an available resource level for a given one of said plurality of resource types.

Merge means for merging said Price Vector with said Resource Vector to produce a Downgrade Vector specifying resource levels supported by a given application which a user is prepared to accept in a descending order of user preference, may be provided .

Said Downgrade Vector may be transmitted to said transmission network by resource reservation messages.

Said Downgrade Vector may be calculated from a Price Vector and a Resource Vector retrieved from configuration files stored in said subscriber terminal.

Said Downgrade Vector may be calculated from a Price Vector and Resource Vector retrieved by said subscriber terminal from a policy server.

Said Downgrade Vector may be calculated from a Price Vector, derived directly from requests addressed to a user of said subscriber terminal, and a Resource Vector retrieved by said subscriber terminal.

A Downgrade Vector may be carried in a RSVP/RESV reservation message.

According to a third aspect of the present invention, there is provided a method of reserving resources in a telecommunications data transmission system comprising a transmission network having a plurality of nodes, a plurality of access nodes and a plurality of subscriber terminals connected to access nodes, said telecommunications data transmission system being adapted to support provision of multimedia telecommunications services and employing a resource reservation protocol, said resource reservation protocol being adapted to permit users to specify a preference for a multiplicity of levels of QoS and said resource reservation protocol being adapted to reserve a plurality of resource types, where the method comprises the features defined in the characterising portion of claim 24.

A user's preference, with regard to QoS, may be recorded as elements of a Price Vector, each element of which corresponds to a notional "price" that a user is prepared to pay for a given level of said multiplicity of levels of QoS.

Default values for each element of said Price Vector may be determined from user trials.

A set of possible resource values for each resource type may be recorded as elements of a Resource Vector, each element of which corresponds to an available resource level for a given one of said plurality of resource types.

Said Price Vector may be merged with said Resource Vector to produce a Downgrade Vector specifying resource levels supported by a given application which a user is prepared to accept in a descending order of user preference.

Said Downgrade Vector may be propagated between nodes in said transmission network in resource reservation messages.

Each of said plurality of subscriber terminals may calculate a Downgrade Vector for each application running thereon, and said subscriber terminal may transmit said Downgrade Vectors to the transmission network.

Said Downgrade Vectors may be calculated from Price Vectors and Resource Vectors retrieved from configuration files stored in said subscriber terminals.

Said Downgrade Vectors may be calculated from Price Vectors and Resource Vectors retrieved from a policy server.

Said Downgrade Vectors may be calculated from Price Vectors, derived directly from requests addressed to a user of said subscriber terminal, and Resource Vectors retrieved by said subscriber terminal.

Said access nodes may calculate a Downgrade Vector from a Price Vector stored in a user database and a Resource Vector.

Downgrade Vectors may be pre-calculating for each application and user, or groups thereof, and said Downgrade Vectors may be stored in a policy server from where they can be retrieved by a subscriber terminal, or access node.

A Downgrade Vector may be carried in a RSVP/RESV reservation message.

Embodiments of the invention will now be described, by way of example, with reference to the accompanying drawings, in which:

Figure 1 is a flow chart for calculating a Downgrade Vector by merging a Resource Vector and Price Vector.

Figure 2 illustrates a resource reservation scheme according to the present invention.

Multimedia applications with distinct quality parameters, e.g. video frame rate, picture resolution, or audio sampling rate, have a certain set of possible resource values that they require from the network. The set of these resource values can be expressed in a Resource Vector. Moreover, users have different opinions about the different quality settings and assign different price thresholds to each resulting in a Price Vector. These two kinds of information can be combined in a Downgrade Vector, which can be carried in the reservation message, e.g. RSVP/RESV, or IRMA/RING. Routers, or ATM switches, can utilise the downgrade vector for intelligent resource reservation.

Multimedia applications usually have several parameters which influence the quantity of network resource, e.g. bandwidth, or multiplexing buffer size, required for a given QoS. For instance, by altering the video coding parameters of a scalable MPEG application, its bandwidth requirement scales from 2.7, 3.085, 3.6, 4.32, 5.4, 7.2 up to 10.8 Mbps, see CAMVision-2 7615, User Guide, Litton Network Access Systems, Inc., October 1998. For describing the general case, the following terminology can be used:

- the number of independent quality parameters of the multimedia application is denoted by N;

- the number of values which can be taken by the nth parameter is denoted by $x_n$, where n=1,2...N;

- the number of independent network resource types, e.g. bandwidth, token bucket size, route, priority, ..., which are demanded by the application is denoted by K; and

- the set of possible resource values for the kth resource type, given in a set is denoted by

$$\Phi_k = \{ r_{k,1}, r_{k,2}, \ldots r_{k,L_k} \} \qquad k = 1,2 \ldots K$$

where $L_k$ denotes the number of elements in the $i^{th}$ resource set, i.e. the number of combinations of every parameter influencing how much the application requires from the $k^{th}$ resource type and $L_k$ is given by:

$$L_k = \prod_{i=1}^{N} x_i \qquad k = 1,2 \ldots K$$

The elements of each Resource Vector can be sorted in descending order yielding K Resource Vectors:

$$r_k = \lfloor r_{k,1}, r_{k,2}, \ldots r_{k,L_k} \rfloor \quad r_i^k \le r_j^k \Leftrightarrow i > j, \quad i,j = 1,2,\ldots L_k; \quad k = 1,2,\ldots K$$

This represents the special information that can be determined in accordance with the capabilities of the multimedia application. It should be noted that some combinations of the N parameters result in the same resource requirement, thus neighbouring elements of a Resource Vector can be equal.

The second task is to describe how much the user prefers the different application's qualities which result from different parameter settings. The simplest way to achieve this task is to establish a vector describing the maximum price that the user is prepared to pay for the different settings of the parameters. Price is simply considered as a type of metric for ranking purposes. In this context "price" relates to a user's preference and does not represent an absolute value and has nothing to do with real charge, cost, or price. If the user does not want to accept a certain parameter combination, he may give 0 as a threshold, in other words he states that he does not wish to pay anything for the quality resulting from this setting. There is a Price Vector for each resource type, namely:

$$p_k = \lfloor p_{k,1}, p_{k,2}, \ldots p_{k,L_k} \rfloor \quad p_{k,i} \in \{0,1,\ldots P\}, \quad i = 1,2 \ldots L_k \quad k = 1,2,\ldots K$$

where P denotes the maximum price in the system (e.g. 65535 or 255).

Default prices can be determined from user trials and can be individual adjusted for each user.

The information about the application and user behaviour, i.e. the Resource and Price Vectors, can be merged into the Downgrade Vector. This vector specifies the resource amounts which the application supports and the user is ready to accept, in a descending order, and can be expressed as:

$$d_k = \left\lfloor d_{k,1}, d_{k,2}, .... d_{k,J_k} \right\rfloor \qquad d_{k,i} \in \Phi_k \qquad i = 1,2,.. J_k; \qquad k = 1,2...K$$

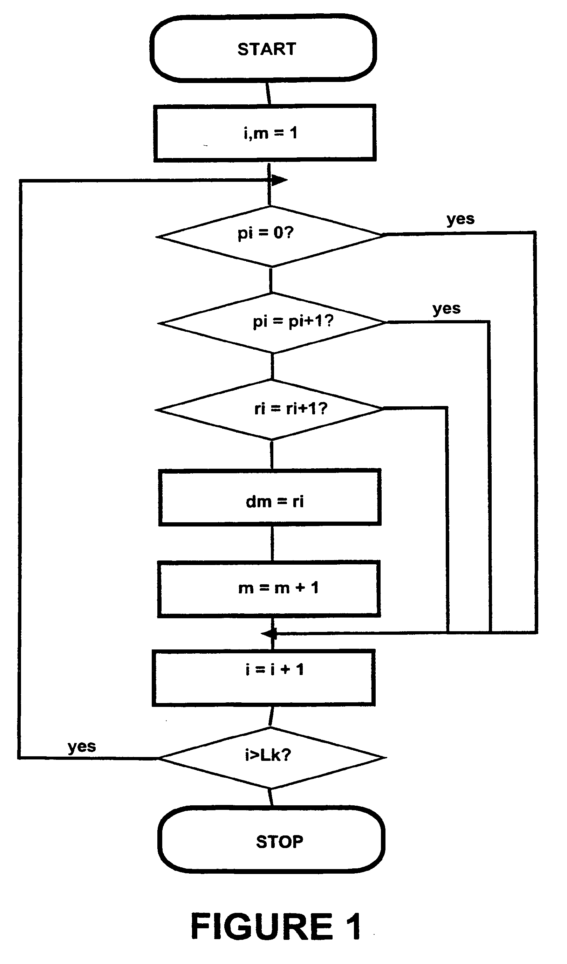

where $J_k$ denotes the number of elements in the Downgrade Vector belonging to the kth resource type. This can be equal, or less than, $L_k$, because all resource values which are not unique, or for which the price is zero or not unique, may be omitted from the Downgrade Vector. It should be noted that the price is not unique if the user does not perceive any difference in the application quality when a quality parameter is changed. Therefore, different parameter combinations, i.e. resource values may be equally preferred, (priced), by the user. The merging algorithm is illustrated by a flowchart shown in Figure 1.

The Downgrade Vector, $d_k$, expresses the information that the network nodes consider during the reservation of the $k^{th}$ resource.

There are many ways of calculating the Downgrade Vector, including:

- by the terminal sending the reservation request;

- at the policy enforcement point, e.g. access routers; and

- by the policy server using the Resource and Price Vectors stored in the policy database.

The three scenarios referred to above will now be described.

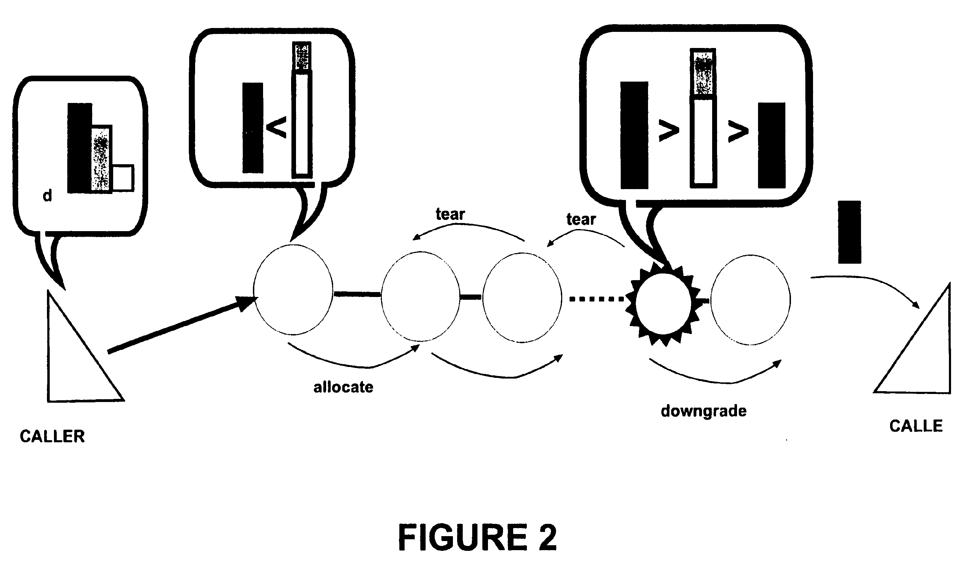

Consider the use of an intelligent terminal. In this scenario, the terminal has the Resource and Price Vectors. Both can be retrieved from a configuration file, or from the policy server, or the latter can also be directly requested from the user. The Downgrade Vector can be calculated for each application demanding QoS in advance, or just before sending the reservation message. A simple scenario is depicted in Figure 2 in order to illustrate a possible reservation scheme for this case. The caller sends the Downgrade Vector, which has three elements, in this example, in the reservation message. The nodes perform CAC and if the largest element of the vector can be admitted, they allocate resources according to that and forward the reservation message onward.

The penultimate node cannot accept the largest resource value, thus it takes the second element, which fits in well with the available resource. It allocates resources, forwards a new reservation message which does not contain the largest resource value, i.e. the new Downgrade Vector starts with the original second element, and sends back a tear message to the previous nodes, in order to release the resources beyond element two. When the reservation message reaches the callee, the connection is established with guaranteed resources.

In the case of policy enforcement in the access node, the user requesting resource reservation is first authenticated to the access node, i.e. the user starts a user session. The access node can look up the Price Vector belonging to the identified user in its user database, or that of the ISP. After authentication, the user specifies the service session by giving some reference to the service, the other parties and the required quality. The access node uses this information to find the right policy for the user and the service, e.g. by contacting the policy server. This policy information contains the proper Price Vector, or at least a part of it, if the user is not allowed to take all resource values. The access node can then calculate the Downgrade Vector and initiate the reservation by sending the Downgrade Vector in a reservation message (e.g. IRMA/RING).

In the case of a static handling policy, the policy server stores pre-calculated Downgrade Vectors for each application and user, or application group and user group. The host, or the access node, retrieves these preexisting Downgrade Vectors before initiating a reservation.

The Downgrade Vector can be built into any resource reservation protocol, which handles explicit resource demands, e.g. ATMF/UNI, ITU/Q.2931, IETF/RSVP and IRMA/RING. The network nodes are then able to perform downgrading based on the Downgrade Vector.

The Resource and Price Vectors can be built into policy servers, which store the relationships among users - applications - and network policy. Instead of a simple high/low priority mapping, a complete Preference Vector can be stored in this table. The policy can be obtained by the policy enforcement point, or the sending host, and merged together into a Downgrade Vector.

The advantages of using the Downgrade Vector, as outlined above, include:

- fewer connection setup trials yielding:

  - shorter and fixed connection setup time;

- less demand for temporarily allocated resources, leading to a reduced probability of call blocking; and

- fewer signalling messages per connection setup;

- dynamic policy handling; and

- more useful and informative network policies, i.e. not only high, medium, low priority.

Known signalling protocols for resource reservation specify only one, or two, bandwidth values, while the downgrade vector describes the full range of possible resource levels for several resource types which can be taken by the application and which are preferred by the user.

The definition of Resource Vector, Price Vector and Downgrade Vector for generalised resource types and applications, their calculation and usage for policy based resource reservation, is unique to the present invention. A simpler concept using the downgrade vector has been described for the videophone service with four quality parameters and one resource type, namely bandwidth, see R. Szabó, I. Cselényi, Performance Evaluation of an Intelligent Resource Allocation Scheme for Multimedia Applications, SPECTS'98, Symposium on Performance Evaluation of Computer and Telecommunication Systems, Reno, Nevada, July 19-22, 1998, pp. 302-306

The present invention has particular application to the IRMA (Intelligent Resource Management Architecture) project, an ongoing internal project conducted by Telia Research. A new, hop-by-hop resource reservation protocol, called RING, has been implemented in the IRMA Router prototype. The current prototype will be extended by:

- the use of a QoS User Interface on the user's terminal which can connect to the policy server, retrieve the Resource and Price Vectors and calculate the Downgrade Vector for the applications for which the user wants to reserve resources;

- the RING reservation message being extended with a field carrying the Downgrade Vector; and

- RING-aware nodes performing downgrading using the Downgrade Vector.

## Claims

1. A telecommunications data transmission system comprising a transmission network having a plurality of nodes, a plurality of access nodes and a plurality of subscriber terminals connected to access nodes, said telecommunications data transmission system being adapted to support provision of multimedia telecommunications services and employing a resource reservation protocol, said resource reservation protocol being adapted to permit users to specify a preference for a multiplicity of levels of QoS and said resource reservation protocol being adapted to reserve a plurality of resource types, **characterised in that** a Downgrade Vector is built into a resource reservation protocol adapted to handle specific resource demands.

2. A telecommunications data transmission system, as claimed in claim 1, **characterised in that** a user's preference with regard to QoS is recorded by elements of a Price Vector, each element of which corresponds to a notional "price" that a user is prepared to pay for a given level of said multiplicity of levels of QoS.

3. A telecommunications data transmission system, as claimed in claim 2, **characterised in that** default values for each element of said Price Vector are determined from user trials.

4. A telecommunications data transmission system, as claimed in any previous claim, **characterised in that** a set of possible resource values for each resource type are recorded by the elements of a Resource Vector, each element of which corresponds to an available resource level for a given one of said plurality of resource types.

5. A telecommunications data transmission system, as claimed in claim 4, **characterised in that** there is provided merge means for merging said Price Vector with said Resource Vector to produce a Downgrade Vector specifying resource levels supported by a given application which a user is prepared to accept in a descending order of user preference.

6. A telecommunications data transmission system, as claimed in claim 5, **characterised in that** said Downgrade Vector is carried by resource reservation messages propagated between nodes in said transmission network.

7. A telecommunications data transmission system, as claimed in claim 6, **characterised in that** each of said plurality of subscriber terminals is adapted to calculate a Downgrade Vector for each application running thereon and **in that** said subscriber terminal is adapted to transmit said Downgrade Vectors to the transmission network.

8. A telecommunications data transmission system, as claimed in claim 7, **characterised in that** said Downgrade Vectors are calculated from Price Vectors and Resource Vectors retrieved from configuration files stored in said subscriber terminals.

9. A telecommunications data transmission system, as claimed in claim 7, **characterised in that** said Downgrade Vectors are calculated from Price Vectors and Resource Vectors retrieved by said subscriber terminals from a policy server.

10. A telecommunications data transmission system, as claimed in claim 7, **characterised in that** said Downgrade Vectors are calculated from Price Vectors, derived directly from requests addressed to a user of said subscriber terminal, and Resource Vectors retrieved by said subscriber terminal.

11. A telecommunications data transmission system, as claimed in claim 6, **characterised in that** said access nodes are adapted to calculate a Downgrade Vector from a Price Vector stored in a user database and a Resource Vector.

12. A telecommunications data transmission system, as claimed in claim 6, **characterised in that** Downgrade Vectors for each application and user, or groups thereof, are pre-calculated and stored in a policy server from where they can be retrieved by a subscriber terminal, or access node.

13. A telecommunications data transmission system, as claimed in any previous claim, **characterised in that** a Downgrade Vector is carried in a RSVP/RESV reservation message.

14. A telecommunications data transmission system, as claimed in any of claims 1 to 12, **characterised in that** a Downgrade Vector is carried in an IRMA/RING reservation message.

15. A subscriber terminal, for use with a telecommunications data transmission system as claimed in any of claims 1 to 14, and adapted to support a resource reservation protocol, said resource reservation protocol being adapted to permit users to specify a preference for a multiplicity of levels of QoS and said resource reservation protocol being adapted to reserve a plurality of resource types **characterised in that** a Downgrade vector is built into a resource reservation protocol adapted to handle specific resource demands.

16. A subscriber terminal, as claimed in claim 15, **characterised in that** a user's preference with regard to QoS is recorded by elements of a Price Vector each element of which corresponds to a notional "price" that a user is prepared to pay for a given level of said multiplicity of levels of QoS.

17. A subscriber terminal, as claimed in either claim 15, or 16, **characterised in that** a set of possible resource values for each resource type are recorded by the elements of a Resource Vector, each element of which corresponds to an available resource level for a given one of said plurality of resource types.

18. A subscriber terminal, as claimed in claim 17, **characterised in that** there is provided merge means for merging said Price Vector with said Resource Vector to produce a Downgrade Vector specifying resource levels supported by a given application which a user is prepared to accept in a descending order of user preference.

19. A subscriber terminal, as claimed in claim 18, **characterised in that** said Downgrade Vector is transmitted to said transmission network by resource reservation messages.

20. A subscriber terminal, as claimed in claim 19, **characterised in that** said Downgrade Vector is calculated from a Price Vector and a Resource Vector retrieved from configuration files stored in said subscriber terminal.

21. A subscriber terminal, as claimed in claim 19, **characterised in that** said Downgrade Vector is calculated from a Price Vector and Resource Vector retrieved by said subscriber terminal from a policy server.

22. A subscriber terminal, as claimed in claim 19, **characterised in that** said Downgrade Vector is calculated from a Price Vector, derived directly from requests addressed to a user of said subscriber terminal, and a Resource Vector retrieved by said subscriber terminal.

23. A subscriber terminal, as claimed in any of claims 15 to 22, **characterised in that** a Downgrade Vector is carried in a RSVP/RESV reservation message.

24. A method of reserving resources in a telecommunications data transmission system comprising a transmission network having a plurality of nodes, a plurality of access nodes and a plurality of subscriber terminals connected to access nodes, said telecommunications data transmission system being adapted to support provision of multimedia telecommunications services and employing a resource reservation protocol, said resource reservation protocol being adapted to permit users to specify a preference for a multiplicity of levels of QoS and said resource reservation protocol being adapted to reserve a plurality of resource types, **characterised in that** a Downgrade Vector is built into a resource reservation protocol adapted to handle specific resource demands.

25. A method, as claimed in claim 24, **characterised by** recording a user's preference with regard to QoS as elements of a Price Vector, each element of which corresponds to a notional "price" that a user is prepared to pay for a given level of said multiplicity of levels of QoS.

26. A method, as claimed in claim 25, **characterised by** determining default values for each element of said Price Vector from user trials.

27. A method, as claimed in any of claims 24 to 26, **characterised by** recording a set of possible resource values for each resource type as elements of a Resource Vector, each element of which corresponds to an available resource level for a given one of said plurality of resource types.

28. A method, as claimed in claim 27, **characterised by** merging said Price Vector with said Resource Vector to produce a Downgrade Vector specifying resource levels supported by a given application which a user is prepared to accept in a descending order of user preference.

29. A method, as claimed in claim 28, **characterised by** propagating said Downgrade Vector between nodes in said transmission network in resource reservation messages.

30. A method, as claimed in claim 29, **characterised by** each of said plurality of subscriber terminals calculating a Downgrade Vector for each application running thereon, and by said subscriber terminal transmitting said Downgrade Vectors to the transmission network.

31. A method, as claimed in claim 30, **characterised in that** said Downgrade Vectors are calculated from Price Vectors and Resource Vectors retrieved from configuration files stored in said subscriber terminals.

32. A method, as claimed in claim 30, **characterised by** calculating said Downgrade Vectors from Price Vectors and Resource Vectors retrieved from a policy server.

33. A method, as claimed in claim 30, **characterised by** calculating said Downgrade Vectors from Price Vectors, derived directly from requests addressed to a user of said subscriber terminal, and Resource Vectors retrieved by said subscriber terminal.

34. A method, as claimed in claim 29, **characterised by** said access nodes calculating a Downgrade Vector from a Price Vector stored in a user database and a Resource Vector.

35. A method, as claimed in claim 29, **characterised by** pre-calculating Downgrade Vectors for each application and user, or groups thereof, and storing said Downgrade Vectors in a policy server from where they can be retrieved by a subscriber terminal, or access node.

36. A method, as claimed in any of claims 24 to 35, **characterised by** carrying a Downgrade Vector in a RSVP/RESV reservation message.

**EP 1 195 074 B1**

**Patentansprüche**

1. Telekommunikations-Datenübertragungssystem, das ein Übertragungsnetz aufweist, das eine Mehrzahl von Knoten, eine Mehrzahl von Zugangsknoten und eine Mehrzahl von Teilnehmerendgeräten hat, die mit den Zugangsknoten verbunden sind, welches Telekommunikations-Datenübertragungssystem dazu ausgebildet ist, die Bereitstellung von Multimediatelekommunikationsdiensten zu unterstützen, und ein Ressourcenreservierungsprotokoll verwendet, welches Ressourcenreservierungsprotokoll dazu ausgebildet ist, es Benutzern zu erlauben, eine Bevorzugung für eine Mehrzahl von Pegeln von QoS (Qualität des Dienstes) anzugeben, und das Ressourcenreservierungsprotokoll dazu ausgebildet ist, eine Mehrzahl von Ressourcentypen zu reservieren, **dadurch gekennzeichnet, dass** ein Herabstufungsvektor (Downgrade Vector) in ein Ressourcenreservierungsprotokoll eingebaut ist, das dazu ausgebildet ist, besondere Ressourcenanforderungen zu handhaben.

2. Telekommunikations-Datenübertragungssystem nach Anspruch 1, **dadurch gekennzeichnet, dass** eine Bevorzugung eines Benutzers in Bezug auf QoS durch Elemente eines Preisvektors aufgezeichnet wird, wobei jedes Element desselben einem fiktiven "Preis" entspricht, den ein Benutzer für einen gegebenen Pegel der Vielfalt von Pegeln von QoS zu bezahlen bereit ist.

3. Telekommunikations-Datenübertragungssystem nach Anspruch 2, **dadurch gekennzeichnet, dass** Vorgabewerte für jedes Element des Preisvektors von Versuchen des Benutzers bestimmt werden.

4. Telekommunikations-Datenübertragungssystem nach einem vorangehenden Anspruch, **dadurch gekennzeichnet, dass** ein Satz von möglichen Ressourcenwerten für jeden Ressourcentyp durch die Elemente eines Ressourcenvektors aufgezeichnet wird, wobei jedes Element desselben einem zur Verfügung stehenden Ressourcenpegel für einen vorgegebenen der Mehrzahl von Ressourcentypen entspricht.

5. Telekommunikations-Datenübertragungssystem nach Anspruch 4, **dadurch gekennzeichnet, dass** Zusammenführungsmittel zum Zusammenführen des Preisvektors mit dem Ressourcenvektor vorgesehen sind, um einen Herabstufungsvektor zu erzeugen, der Ressourcenpegel angibt, die durch eine vorgegebene Anwendung unterstützt werden, die ein Benutzer in absteigender Reihenfolge der Benutzerbevorzugung bereit ist, zu akzeptieren.

6. Telekommunikations-Datenübertragungssystem nach Anspruch 5, **dadurch gekennzeichnet, dass** der Herabstufungsvektor durch Ressourcenreservierungsmeldungen getragen wird, die zwischen Knoten in dem Übertragungsnetz weitergeleitet werden.

7. Telekommunikations-Datenübertragungssystem nach Anspruch 6, **dadurch gekennzeichnet, dass** jedes der Mehrzahl von Teilnehmerendgeräten dazu ausgebildet ist, einen Herabstufungsvektor für jede darauf laufende Anwendung zu berechnen, und dass das Teilnehmerendgerät dazu ausgebildet ist, die Herabstufungsvektoren zum Übertragungsnetz zu übertragen.

8. Telekommunikations-Datenübertragungssystem nach Anspruch 7, **dadurch gekennzeichnet, dass** die Herabstufungsvektoren aus Preisvektoren und Ressourcenvektoren berechnet werden, die aus Konfigurationsdateien abgerufen werden, die in den Teilnehmerendgeräten gespeichert sind.

9. Telekommunikations-Datenübertragungssystem nach Anspruch 7, **dadurch gekennzeichnet, dass** die HerabstuEungsvektoren aus Preisvektoren und Ressourcenvektoren berechnet werden, die durch die Teilnehmerendgeräte von einem Politikserver abgerufen werden.

10. Telekommunikations-Datenübertragungssystem nach Anspruch 7, **dadurch gekennzeichnet, dass** die Herabstufungsvektoren aus Preisvektoren, die direkt von Anforderungen abgeleitet werden, die zu einem Benutzer des Teilnehmerendgerätes adressiert sind, und Ressourcenvektoren berechnet werden, die durch das Teilnehmer" endgerät abgerufen werden.

11. Telekommunikations-Datenübertragungssystem nach Anspruch 6, **dadurch gekennzeichnet, dass** die Zugangsknoten dazu ausgebildet sind, einen Herabstufungsvektor aus einem Preisvektor, der in einer Benutzerdatenbank gespeichert ist, und einem Ressourcenvektor zu berechnen.

12. Telekommunikations-Datenübertragungssystem nach Anspruch 6, **dadurch gekennzeichnet, dass** Herabstufungsvektoren für jede Anwendung und jeden Benutzer oder Gruppen derselben vorberechnet sind und in einem Politikserver gespeichert sind, von wo sie durch ein Teilnehmerendgerät oder einen Zugangsknoten, abgerufen werden können.

13. Telekommunikations-Datenübertragungssystem nach einem vorangehenden Anspruch, **dadurch gekennzeichnet, dass** ein Herabstufungsvektor in einer RSVP/RESV-Reservierungsmeldung getragen wird.

14. Telekommunikations-Datenübertragungssystem nach einem der Ansprüche 1 bis 12, **dadurch gekennzeichnet, dass** ein Herabstufungsvektor in einer IRMA/RING-Reservationsmeldung getragen ist.

15. Teilnehmerendgerät für Benutzung mit einem Telekommunikations-Datenübertragungssystem nach einem der Ansprüche 1 bis 14, und das dazu ausgebildet ist, ein Ressourcenreservierungsprotokoll zu unterstützen, welches Ressourcenreservierungsprotokoll dazu ausgebildet ist, es Benutzern zu erlauben, eine Bevorzugung für eine Vielfalt von Pegeln des QoS (Qualität des Dienstes) anzugeben, und wobei das Ressourcenreservierungsprotokoll dazu ausgebildet ist, eine Mehrzahl von Ressourcentypen zu reservieren, **dadurch gekennzeichnet, dass** ein Herabstufungsvektor (Downgrade Vector) in ein Ressourcenreservierungsprotokoll eingebaut ist, das dazu ausgebildet ist, besondere Ressourcenanforderungen zu handhaben.

16. Teilnehmerendgerät nach Anspruch 15, **dadurch gekennzeichnet, dass** eine Bevorzugung eines Benutzers in Bezug auf QoS durch Elemente eines Preisvektors aufgezeichnet wird, wobei jedes Element desselben einem fiktiven "Preis" entspricht, den ein Benutzer für einen gegebenen Pegel der Vielfalt von Pegeln des QoS bereit ist zu bezahlen.

17. Teilnehmerendgerät nach Anspruch 15 oder 16, **dadurch gekennzeichnet, dass** ein Satz von möglichen Ressourcenwerten für jeden Ressourcentyp durch die Elemente eines Ressourcenvektors aufgezeichnet wird, wobei jedes Element desselben einem zur Verfügung stehenden Ressourcenpegel für einen vorgegebenen der Mehrzahl von Ressourcentypen entspricht.

18. Teilnehmerendgerät nach Anspruch 17, **dadurch gekennzeichnet, dass** Zusammenführungsmittel zum Zusammenführen des Preisvektors mit dem Ressourcenvektor vorgesehen sind, um einen Herabstufungsvektor zu erzeugen, der Ressourcenpegel angibt, die durch eine vorgegebene Anwendung unterstützt sind, die ein Benutzer in absteigender Reihenfolge von Benutzerbevorzugung bereit ist, zu akzeptieren.

19. Teilnehmerendgerät nach Anspruch 18, **dadurch gekennzeichnet, dass** der Herabstufungsvektor zu dem Übertragungsnetz durch Ressourcenreservierungsmeldungen übertragen wird.

20. Teilnehmerendgerät nach Anspruch 19, **dadurch gekennzeichnet, dass** der Herabstufungsvektor aus einem Preisvektor und einem Ressourcenvektor berechnet wird, die von Konfigurationsdateien abgerufen werden, die in dem Teilnehmerendgerät gespeichert sind.

21. Teilnehmerendgerät nach Anspruch 19, **dadurch gekennzeichnet, dass** der Herabstufungsvektor aus einem Preisvektor und einem Ressourcenvektor berechnet wird, die durch das Teilnehmerendgerät von einem Politikserver abgerufen werden.

22. Teilnehmerendgerät nach Anspruch 19, **dadurch gekennzeichnet, dass** der Herabstufungsvektor aus einem Preisvektor, der direkt von Anforderungen abgeleitet wird, die an einen Benutzer des Teilnehmerendgerätes adressiert sind, und einem Ressourcenvektor berechnet wird, der durch das Teilnehmerendgerät abgerufen wird.

23. Teilnehmerendgerät nach einem der Ansprüche 15 bis 22, **dadurch gekennzeichnet, dass** ein Herabstufungsvektor in einer RSVP/RESV-Reservierungsmeldung getragen ist.

24. Verfahren zum Reservieren von Ressourcen in einem Telekommunikations-Datenübertragungssystem, das ein Ubertragungsnetz aufweist, das eine Mehrzahl von Knoten, eine Mehrzahl von Zugangsknoten und eine Mehrzahl von Teilnehmerendgeräten hat, die mit Zugangsknoten verbunden sind, welches Telekommunikations-Datenübertragungssystem dazu ausgebildet ist, die Bereitstellung von Multimediatelekommunikationsdiensten zu unterstützen und ein Ressourcenreservierungsprotokoll verwendet, welches Ressourcenreservierungsprotokoll dazu ausgebildet ist, es Benutzern zu erlauben, eine Bevorzugung für eine Vielfalt von Pegeln von QoS (Qualität des Dienstes) anzugeben, und das Ressourcenreservierungsprotokoll dazu ausgebildet ist, eine Mehrzahl von Ressourcentypen zu reservieren, **dadurch gekennzeichnet, dass** ein Herabstufungsvektor in ein Ressourcenreservierungsprotokoll eingebaut ist, das dazu ausgebildet ist, besondere Ressourcenanforderungen zu handhaben.

25. Verfahren nach Anspruch 24, **gekennzeichnet durch** Aufzeichnen einer Bevorzugung eines Benutzers in Bezug auf QoS als Elemente eines Preisvektors, wobei jedes Element desselben einem fiktiven "Preis" entspricht, den ein Benutzer für einen gegebenen Pegel der Vielfalt von Pegeln von QoS zu bezahlen bereit ist.

26. Verfahren nach Anspruch 25, **gekennzeichnet durch** Bestimmen von Vorgabewerten für jedes Element des Preisvektors aus Benutzerversuchen.

27. Verfahren nach einem der Ansprüche 24 bis 26, **gekennzeichnet durch** Aufzeichnen eines Satzes möglicher Ressourcenwerte für jeden Ressourcentyp als Elemente eines Ressourcenvektors, wobei jedes Element desselben einem zur Verfügung stehenden Ressourcenpegel für einen vorgegebenen der Mehrzahl von Ressourcentypen entspricht.

28. Verfahren nach Anspruch 27, **gekennzeichnet durch** Zusammenführen des Preisvektors mit dem Ressourcenvektor, um einen Herabstufungsvektor zu erzeugen, der Ressourcenpegel angibt, die **durch** eine vorgegebene Anwendung unterstützt werden, die ein Benutzer in absteigender Reihenfolge von Benutzerbevoruzung bereit ist, zu akzeptieren.

29. Verfahren nach Anspruch 28, **gekennzeichnet durch** Ausbreiten des Herabstufungsvektors zwischen Knoten in dem Übertragungsnetz in Ressourcenreservierungsmeldungen.

30. Verfahren nach Anspruch 29, **dadurch gekennzeichnet, dass** jedes der Mehrzahl von Teilnehmerendgeräten einen Herabstufungsvektor für jede darauf laufende Anwendung berechnet, und dass das Teilnehmerendgerät die Herabstufungsvektoren zu dem Übertragungsnetz überträgt.

31. Verfahren nach Anspruch 30, **dadurch gekennzeichnet, dass** die Herabstufungsvektoren aus Preisvektoren und Ressourcenvektoren berechnet werden, die aus Konfigurationsdateien abgerufen werden, die in den Teilnehmerendgeräten gespeichert sind.

32. Verfahren nach Anspruch 30, **gekennzeichnet durch** Berechnen der Herabstufungsvektoren aus Preisvektoren und Ressourcenvektoren, die von einem Politikserver abgerufen werden.

33. Verfahren nach Anspruch 30, **gekennzeichnet durch** Berechnen der Herabstufungsvektoren aus Preisvektoren, die direkt von Anforderungen abgeleitet werden, die an einen Benutzer des Teilnehmerendgerätes adressiert sind, und aus Ressourcenvektoren, die **durch** das Teilnehmerendgerät abgerufen werden.

34. Verfahren nach Anspruch 29, **dadurch gekennzeichnet, dass** die Zugangsknoten einen Herabstufungsvektor aus einem Preisvektor, der einer Benutzerdatenbank gespeichert ist, und einem Ressourcenvektor berechnen.

35. Verfahren nach Anspruch 29, **dadurch gekennzeichnet, dass** Herabstufungsvektoren für jede Anwendung und jeden Benutzer, oder Gruppen derselben vorberechnet werden und die Herabstufungsvektoren in einem Politikserver gespeichert werden, von wo sie durch ein Teilnehmerendgerät oder einen Zugangsknoten abgerufen werden können.

36. Verfahren nach einem der Ansprüche 24 bis 35, **gekennzeichnet durch** Tragen eines Herabstufungsvektors in einer RSVP/RESV-Reservierungsmeldung.

## Revendications

1. Système de télécommunications de transmission de données comprenant un réseau de transmission ayant une pluralité de noeuds, une pluralité de noeuds d'accès et une pluralité de bornes de l'abonné connectées aux noeuds d'accès, ledit système de télécommunications de transmission de données étant adapté pour soutenir la prestation de services de télécommunications multimédia et utilisant un protocole de réservation de ressources, ledit protocole de réservation de ressources étant adapté pour permettre aux utilisateurs de spécifier une préférence pour une multiplicité de niveaux de QoS (qualité de service) et ledit protocole de réservation de ressources étant adapté pour réserver une pluralité de types de ressources, **caractérisé en ce qu'**un vecteur de déclassement est inclus dans un protocole de réservation de ressources adapté pour traiter des demandes de ressources spécifiques.

2. Système de télécommunications de transmission de données, selon la revendication 1, **caractérisé en ce qu'**une préférence de l'utilisateur par rapport à la QoS est enregistrée par des éléments d'un vecteur de prix, chaque élément de celui-ci correspond à un « prix » notionnel qu'un utilisateur est prêt à payer pour un niveau donné de ladite multiplicité de niveaux de la QoS.

3. Système de télécommunications de transmission de données selon la revendication 2, **caractérisé en ce que** les valeurs par défaut pour chaque élément dudit vecteur de prix sont déterminées à partir d'essais de l'utilisateur.

4. Système de télécommunications de transmission de données, selon l'une quelconque des revendications précédentes, **caractérisé en ce qu'**un ensemble de valeurs de ressources possibles pour chaque type de ressource est enregistré par les éléments d'un vecteur de ressource, chaque élément de celui-ci correspond à un niveau de ressource disponible pour un type donné parmi ladite pluralité de types de ressources.

5. Système de télécommunications de transmission de données, selon la revendication 4, **caractérisé en ce qu'**il est fourni des moyens de fusion pour fusionner ledit vecteur de prix et ledit vecteur de ressource pour produire un vecteur de déclassement spécifiant les niveaux de ressources supportés par une application donnée qu'un utilisateur est prêt à accepter selon un ordre décroissant de la préférence de l'utilisateur.

6. Système de télécommunications de transmission de données, selon la revendication 5, **caractérisé en ce que** ledit vecteur de déclassement est transporté par des messages de réservation de ressources propagés entre les noeuds dans ledit réseau de transmission.

7. Système de télécommunications de transmission de données, selon la revendication 6, **caractérisé en ce que** chaque borne parmi ladite pluralité de bornes de l'abonné est adaptée pour calculer un vecteur de déclassement pour chaque application exécutée sur celle-ci et **en ce que** ladite borne de l'abonné est adapté pour transmettre lesdits vecteurs de déclassement au réseau de transmission.

8. Système de télécommunications de transmission de données, selon la revendication 7, **caractérisé en ce que** lesdits vecteurs de déclassement sont calculés à partir des vecteurs de prix et des vecteurs de ressources extraits des fichiers de configuration stockés dans lesdites bornes de l'abonné.

9. Système de télécommunications de transmission de données, selon la revendication 7, **caractérisé en ce que** lesdits vecteurs de déclassement sont calculés à partir des vecteurs de prix et des vecteurs de ressources extraits par lesdites bornes de l'abonné d'un serveur de règles.

10. Système de télécommunications de transmission de données, selon la revendication 7, **caractérisé en ce que** lesdits vecteurs de déclassement sont calculés à partir des vecteurs de prix, dérivés directement des requêtes adressées à un utilisateur de ladite borne de l'abonné, et des vecteurs de ressources extraits par ladite borne de l'abonné.

11. Système de télécommunications de transmission de données, selon la revendication 6, **caractérisé en ce que** lesdits noeuds d'accès sont adaptés pour calculer un vecteur de déclassement à partir d'un vecteur de prix stocké dans une base de données de l'utilisateur et d'un vecteur de ressource.

12. Système de télécommunications de transmission de données, selon la revendication 6, **caractérisé en ce que** les vecteurs de déclassement pour chaque application et utilisateur, ou groupes de ceux-ci, sont calculés préalablement et stockés dans un serveur de règles duquel ils peuvent être extraits par une borne de l'abonné, ou un noeud d'accès.

13. Système de télécommunications de transmission de données, selon l'une quelconque des revendications précédentes, **caractérisé en ce qu'**un vecteur de déclassement est transporté dans un message de réservation RSVP/RESV.

14. Système de télécommunications de transmission de données, selon l'une quelconque des revendications 1 à 12, **caractérisé en ce qu'**un vecteur de déclassement est transporté dans un message de réservation IRMA/RING.

15. Borne de l'abonné, destinée à être utilisée avec un système de télécommunications de transmission de données

selon l'une quelconque des revendications 1 à 14, et adaptée pour supporter un protocole de réservation de ressources, ledit protocole de réservation de ressources étant adapté pour permettre aux utilisateurs de spécifier une préférence pour une multiplicité de niveaux de QoS et ledit protocole de réservation de ressources étant adapté pour réserver une pluralité de types de ressources, **caractérisé en ce qu'**un vecteur de déclassement est inclus dans un protocole de réservation de ressources adapté pour traiter les demandes de ressources spécifiques,

16. Borne de l'abonné, selon la revendication 15, **caractérisée en ce qu'**une préférence de l'utilisateur par rapport à la QoS est enregistrée par les éléments d'un vecteur de prix, chaque élément de celui-ci correspond au « prix » notionnel qu'un utilisateur est prêt à payer pour un niveau donné de ladite multiplicité de niveaux de QoS.

17. Borne de l'abonné, selon la revendication 15 ou la revendication 16, **caractérisée en ce qu'**un ensemble de valeurs de ressources possibles pour chaque type de ressource est enregistré par les éléments d'un vecteur de ressource, chaque élément de celui-ci correspond à un niveau de ressource disponible pour un type donné parmi ladite pluralité de types de ressources.

18. Borne de l'abonné, selon la revendication 17, **caractérisée en ce qu'**il est fourni des moyens de fusion pour fusionner ledit vecteur de prix et ledit vecteur de ressources pour produire un vecteur de déclassement spécifiant les niveaux de ressources supportés par une application donnée qu'un utilisateur est prêt à accepter selon un ordre décroissant de préférence de l'utilisateur.

19. Borne de l'abonné, selon la revendication 18, **caractérisé en ce que** ledit vecteur de déclassement est transmis audit réseau de transmission par les messages de réservation de ressources.

20. Borne de l'abonné, selon la revendication 19, **caractérisée en ce que** ledit vecteur de déclassement est calculé à partir d'un vecteur de prix et d'un vecteur de ressource extraits de fichiers de configuration stockés dans ladite borne de l'abonné.

21. Borne de l'abonné, selon la revendication 19 **caractérisée en ce que** ledit vecteur de déclassement est calculé à partir d'un vecteur de prix et d'un vecteur de ressource extraits par ladite borne de l'abonné d'un serveur de règles.

22. Borne de l'abonnée selon, la revendication 19 **caractérisée en ce que** ledit vecteur de déclassement est calculé à partir d'un vecteur de prix, dérivé directement de requêtes adressées à un utilisateur de ladite borne de l'abonné et d'un vecteur de ressources extrait par ladite borne de l'abonné.

23. Borne de l'abonné, selon l'une quelconque des revendications 15 à 22, **caractérisée en ce qu'**un vecteur de déclassement est transporté dans un message de réservation RSVP/RESV.

24. Procédé de réservation de ressources dans un système de télécommunications de transmission de données comprenant un réseau de transmission ayant une pluralité de noeuds, une pluralité de noeuds d'accès et une pluralité de bornes de l'abonné connectées aux noeuds d'accès, ledit système de télécommunications de transmission de données étant adapté pour soutenir la prestation de services de télécommunications multimédia et utilisant un protocole de réservation de ressources, ledit protocole de réservation de ressources étant adapté pour permettre aux utilisateurs de spécifier une préférence pour une multiplicité de niveaux de la QoS et ledit protocole de réservation de ressources étant adapté pour réserver une pluralité de types de ressources, **caractérisé en ce qu'**un vecteur de déclassement est inclus dans un protocole de réservation de ressources adapté pour traiter des demandes de ressources spécifiques.

25. Procédé, selon la revendication 24, **caractérisé en ce qu'**il comprend l'enregistrement d'une préférence de l'utilisateur par rapport à la QoS sous la forme d'éléments d'un vecteur de prix, chaque élément de celui-ci correspond à un « prix » notionnel qu'un utilisateur est prêt à payer pour un niveau donné de ladite multiplicité de niveaux de QoS.

26. Procédé, selon la revendication 25, **caractérisé en ce qu'**il comprend la détermination de valeurs par défaut pour chaque élément dudit vecteur de prix à partir dressais de l'utilisateur.

27. Procédé, selon l'une quelconque des revendications 24 à 26, **caractérisé en ce qu'**il comprend l'enregistrement d'un ensemble de valeurs de ressources possibles pour chaque type de ressource sous la forme d'éléments d'un vecteur de ressource, chaque élément de celui-ci correspond à un niveau de ressource disponible pour un type donné parmi ladite pluralité de types de ressources.

**28.** Procédé, selon la revendication 27, **caractérisé en ce qu'**il comprend la fusion dudit vecteur de prix et ledit vecteur de ressource pour produire un vecteur de déclassement spécifiant les niveaux de ressource supportés par une application donnée qu'un utilisateur est prêt à accepter selon un ordre décroissant de la préférence de l'utilisateur.

**29.** Procédé, selon la revendication 28, **caractérisé en ce qu'**il comprend la propagation dudit vecteur de déclassement entre des noeuds dans ledit réseau de transmission dans des messages de réservation de ressources.

**30.** Procédé, selon la revendication 29, **caractérisé en ce que** chaque borne parmi ladite pluralité de bornes de l'abonné calcule un vecteur de déclassement pour chaque application exécutée sur celle-ci, et **en ce que** ladite borne de l'abonné transmet lesdits vecteurs de déclassement au réseau de transmission.

**31.** Procédé, selon la revendication 30, **caractérisé en ce que** lesdits vecteurs de déclassement sont calculés à partir des vecteurs de prix et des vecteurs de ressources extraits de fichiers de configuration stockés dans lesdites bornes de l'abonné.

**32.** Procédé, selon la revendication 30, **caractérisé en ce qu'**il comprend le calcul desdits vecteurs de déclassement à partir des vecteurs de prix et des vecteurs de ressources extraits d'un serveur de règles.

**33.** Procédé, selon la revendication 30, **caractérisé en ce qu'**il comprend le calcul desdits vecteurs de déclassement à partir des vecteurs de prix, dérivés directement des requêtes adressées à un utilisateur de ladite borne de l'abonné, et les vecteurs de ressources extraits par ladite borne de l'abonné.

**34.** Procédé selon la revendication 29, **caractérisé en ce que** les noeuds d'accès calculent un vecteur de déclassement à partir d'un vecteur de prix stocké dans une base de données de l'utilisateur et d'un vecteur de ressource.

**35.** Procédé, selon la revendication 29, **caractérisé en ce qu'**il comprend le calcul préalable des vecteurs de déclassement pour chaque application et utilisateur ou groupes de ceux-ci, et le stockage desdits vecteurs de déclassement dans un serveur de règles duquel ils peuvent être extraits par une borne de l'abonné, ou un noeud d'accès.

**36.** Procédé, selon l'une quelconque des revendications 24 à 35, **caractérisé en ce qu'**il comprend le transport d'un vecteur de déclassement dans un message de réservation RSVP/RESV.

# FIGURE 1

FIGURE 2

EP 1 195 074 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0774878 A2
- WO 9913624 A1

- GB 2319710 A

**Non-patent literature cited in the description**

- **JÉRÔME TASSEL et al.** An End to End Price-Based QoS Control Component Using Reflective Java. *4th COST 237 WORKSHOP,* December 1997, 18-32
- **ERRIN W. PULP et al.** Paying for QoS: An Optimal Distributed Algorithm for Pricing Network Resources. *THE PROCEEDINGS OF THE IWQoS 98 WORKSHOP,* May 1998, 75-84

- **GABRIEL DERMLER et al.** A Negotiation and Resource Reservation Protocol (NRP) for Configurable Multimedia Applications. *IEEE PROCEEDINGS OF MULTIMEDIA '96,* 1996, 113-115
- **R. SZABÓ ; I. CSELÉNYI.** Performance Evaluation of an Intelligent Resource Allocation Scheme for Multimedia Applications, SPECTS'98. *Symposium on Performance Evaluation of Computer and Telecommunication Systems,* 19 July 1998, 302-306